# EUROPÄISCHE PATENTANMELDUNG

(11) **EP 2 412 246 A1**
(43) Veröffentlichungstag der Anmeldung: **01.02.2012**
(21) Anmeldenummer: 10171084.6
(22) Anmeldetag: 28.07.2010
(51) Int. Cl.: A23F 5/08, A47J 42/32, B02C 4/06, B02C 4/44

(54) **Mahlen von Kaffeebohnen**

(71) Anmelder: Bühler AG, 9240 Uzwil (CH)
(72) Erfinder: Keller, Marco, 8514 Bissegg (CH); Braun, Peter, 8280 Kreuzlingen (CH)
(74) Vertreter: Hepp Wenger Ryffel AG

(57) **Zusammenfassung**

Die Erfindung betrifft eine Vorrichtung 1 zum Bearbeiten von gerösteten Kaffeebohnen mit einer Einheit zum Mahlen 4 der Bohnen und ein Verfahren zum Bearbeiten von Kaffeebohnen, wobei die Kaffeebohnen gemahlen werden und die Temperatur des Mahlguts, zumindest bei Beginn des Mahlvorgangs, zwischen 30°C und 150°C, insbesondere zwischen 35°C und 100 °C, bevorzugt zwischen 40°C und 90 °C, weiter bevorzugt zwischen 40°C und 60 °C, beträgt. Die Vorrichtung umfasst dazu eine Thermoeinheit 2.

## Beschreibung

Die Erfindung betrifft eine Vorrichtung zum Bearbeiten von gerösteten Kaffeebohnen mit einer Einheit zum Mahlen der Bohnen und ein Verfahren zum Bearbeiten von Kaffeebohnen, wobei die Kaffeebohnen gemahlen werden und die Temperatur des Mahlguts, zumindest bei Beginn des Mahlvorgangs, zwischen 30°C und 150°C, insbesondere zwischen 35°C und 100 °C, bevorzugt zwischen 40°C und 90 °C, besonders bevorzugt zwischen 40°C und 60 °C beträgt.

Beim herkömmlichen Verarbeitungsprozess zur Herstellung von gemahlenem und abgepackten Kaffee wird grüner Kaffee zunächst bei Temperaturen von über 150°C geröstet und danach mittels Raumluft gekühlt, was typischerweise in einer Bohnentemperatur von ca. 5°C über Raumtemperatur, also einer Bohnentemperatur zwischen 20 - 40 °C, resultiert.

Anschliessend wird der Kaffee vermahlen, wobei die Mahlwerkzeuge, zum Beispiel die Walzen, gekühlt werden und eine Temperaturerhöhung des Mahlkaffees weitgehend vermieden wird. Endtemperaturen des Mahlgutes liegen daher im Bereich 20 - 40 °C.

Beim letzten Teilabschnitt der Röstung kommt es zu pyrolytischen Reaktionen, bei welchen Wasser und CO₂ freigesetzt werden. Da das Zellgefüge der Kaffeebohne eher dickwandig ist, kann sich das CO₂ während des Prozesses nicht verflüchtigen, wodurch sich zum Röstende ein CO₂ bedingter Überdruck in den Zellen ausbildet, welcher bis zu mehreren bar Überdruck betragen kann.

Beim anschliessenden Mahlprozess werden je nach Mahlgrad die Zellen aufgeschlossen, wobei meistens ein Anteil an unbeschädigten Zellen verbleibt. Wird der Mahlkaffee nun direkt nach der Mahlung abgepackt, geht die Entgasung weiter, was somit zur Bombierung wenn nicht sogar zum Zerbersten der Verpackung führen kann. Aus diesem Grunde wird der Kaffee vor dem Abpacken zwischengelagert, um eine ausreichende Entgasung zu erreichen. Der Kaffee wird dazu beim herkömmlichen Verarbeitungsprozess in Silos bis zur kompletten CO₂-Freisetzung gelagert und dann abgepackt.

Während des Verarbeitungsprozesses muss also Platz und Zeit eingeräumt werden.

Ausserdem entweichen bei der offenen Zwischenlagerung auch Geschmacksstoffe und Aromen und es kann zu einer Oxidation des Kaffees kommen, was die Qualität und die Haltbarkeit des Kaffees unter Umständen beeinträchtigt.

Es besteht daher ein Bedarf, die Zwischenlagerung zu verkürzen. Dies kann z.B. erreicht werden, indem, wie z.B. in EP1363401 offenbart, die Verpackung des gemahlenen Kaffees mit einem Einwegventil ausgestattet wird, welches eine CO₂ Entgasung erlaubt, das Eindringen von Sauerstoff aber verhindert. Diese Ventile sind jedoch im Wesentlichen nur für grössere Gebinde geeignet.

Alternativ ist zum Beispiel aus Bezman et al. "Method for Continuous Monitoring Rates of CO2 Release from R&G Coffee" (22nd International Conference on Coffee Science, Campinas Colloquium, 2008) bekannt, dass sich die Entgasung bei einer höheren Lagertemperatur beschleunigt. Diese Vorgehensweise erfordert allerdings einen zusätzlichen Aufwand für die Apparatur und für den Energieaufwand bei der Zwischenlagerung.

Es besteht daher die Aufgabe, die Nachteile des Bekannten zu vermeiden und eine Vorrichtung sowie ein Verfahren zur Bearbeitung von Kaffee bereitzustellen, durch welche eine Entgasung von gemahlenem Kaffee in der Verpackung weitestgehend verhindert werden kann und welche den Verarbeitungsprozess nicht unnötig verlängern und/oder verteuern.

Die Aufgabe wird gelöst durch eine Vorrichtung zum Bearbeiten von gerösteten Kaffeebohnen, wobei die Vorrichtung eine Thermoeinheit umfasst, die sicherstellt, dass die Temperatur der gerösteten Kaffeebohnen während des Mahlvorgangs, zumindest bei Beginn des Mahlvorgangs, zwischen 30°C und 150°C, insbesondere zwischen 35°C und 100°C, bevorzugt zwischen 40°C und 90 °C, besonders bevorzugt zwischen 40°C und 60 °C, beträgt.

Überraschenderweise hat sich herausgestellt, dass es vorteilhaft ist, die gerösteten Kaffeebohnen in Vorbereitung auf den nachfolgenden Mahlprozess, bzw. beim Mahlprozess, nicht auf zu geringe Temperaturen abzukühlen, wie dies üblicherweise getan wird, sondern noch warm in die Einheit zum Mahlen zu überführen und/oder darin zu verarbeiten. Um diesen Vorgang kontrolliert ablaufen zu lassen, enthält die Vorrichtung erfindungsgemäss eine Thermoeinheit. Die Thermoeinheit stellt sicher, dass der Kaffee bei den gewünschten Temperaturen in die Mahleinheit überführt wird und/oder bei den gewünschten Temperaturen vermahlen wird und verhindert, dass der Kaffee zu kalt oder zu warm verarbeitet wird. Dazu kann einerseits der Abkühlvorgang nach dem Rösten kontrolliert abgebrochen werden oder eine aktive Erwärmung erfolgen.

Die Warmvermahlung fördert zum einen die Entgasung während des Mahlvorgangs, zum anderen erübrigt sich eine nachträglich Erwärmung des gemahlenen Kaffees auf ein erhöhtes Temperaturniveau bei der Lagerung. Die Entgasung wird so beschleunigt, die Standzeit wird verkürzt und ein zusätzlicher Energieeintrag nach dem Mahlen ist in der Regel nicht mehr notwendig.

Um einer unerwünschten Aromaabgabe entgegenzuwirken, kann die Thermoeinheit mit einem System zum Aromaschutz oder zur Aromarückgewinnung gekoppelt werden, beispielsweise mit einem Adsorptionssystem.

In einer vorteilhaften Ausführungsform der Erfindung beeinflusst die Thermoeinheit die Temperatur des gerösteten Kaffees vor dem Mahlen. Dazu umfasst die Thermoeinheit eine Temperiereinrichtung und eine Mahlzufuhreinrichtung, wobei die Temperiereinrichtung und Mahlzufuhreinrichtung so ausgelegt sind, dass die gerösteten Kaffeebohnen für den Beginn des Mahlvorgangs auf Temperaturen des Mahlguts von 30°C und 150°C temperierbar und bei diesen Temperaturen mahlbar sind.

Bevorzugt ist die Temperiereinrichtung eine Abkühlvorrichtung, in welcher die gerösteten Kaffeebohnen unmittelbar nach dem Rösten auf eine Temperatur zwischen 30°C und 150°C, insbesondere zwischen 35°C und 100°C, bevorzugt zwischen 40°C und 90 °C, besonders bevorzugt zwischen 40°C und 60 °C abgekühlt werden. Mittels der Mahlzufuhreinrichtung werden die Kaffeebohnen mit dieser Temperatur in die Einheit zum Mahlen überführt.

Alternativ kann die Temperiereinrichtung eine Vorrichtung zum Erwärmen von geröstetem, bereits abgekühltem Kaffee auf eine Temperatur zwischen 30°C und 150°C, insbesondere zwischen 35°C und 100°C, bevorzugt zwischen 40°C und 90 °C, besonders bevorzugt zwischen 40°C und 60 °C, sein.

In einer weiteren vorteilhaften Ausführung der erfindungsgemässen Vorrichtung beeinflusst die Thermoeinheit die Temperatur des gerösteten Kaffees während des Mahlens. Dazu umfasst die Thermoeinheit eine Temperiereinrichtung für die Einheit zum Mahlen, die so ausgelegt ist, dass die Temperatur des Mahlguts zwischen 30°C und 150°C, insbesondere zwischen 35°C und 100°C, bevorzugt zwischen 40°C und 90 °C, besonders bevorzugt zwischen 40°C und 60 °C haltbar ist.

Es kann ausreichen, wenn das Mahlgut die gewünschte Temperatur zu Beginn des Mahlvorgangs hat, vorzugsweise wird jedoch Einfluss auf die Temperatur des Mahlguts während des gesamten Mahlvorgangs genommen.

Die Temperiereinrichtung für die Einheit zum Mahlen kann die gesamte Einheit zum Mahlen auf die Zieltemperatur oder den Zieltemperaturbereich bringen, oder nur die Mahlwerkzeuge.

Bevorzugt handelt es sich bei der Temperiereinrichtung für die Einheit zum Mahlen um eine Temperiereinrichtung für Mahlwerkzeuge, zum Beispiel die Mahlwalzen. Die Temperiereinrichtung hält die Mahlwerkzeuge während des Mahlvorgangs in mindestens einer Mahlstufe auf einer Temperatur oder einem Temperaturbereich zwischen 30°C und 150°C, insbesondere zwischen 35°C und 120°C, weiter insbesondere zwischen 40°C und 110°C, bevorzugt zwischen 40°C und 90°C, besonders bevorzugt zwischen 40°C und 60°C.

Mahlwerkzeuge, zum Beispiel Mahlwalzen, sind häufig mit Kanälen durchsetzt, durch welche Kühlwasser geleitet werden kann. Diese Kanäle können dazu genutzt werden, um eine Temperierflüssigkeit in die Mahlwerkzeuge einzubringen, wobei die Temperatur der Temperierflüssigkeit, beispielsweise Wasser oder Öl, derart steuer- und/oder regelbar ist, dass die Werkzeuge auf die gewünschte Zieltemperatur, bzw. den gewünschten Zieltemperaturbereich gebracht werden.

Die Temperierung der Mahlwerkzeuge kann auch thermoelektrisch, beispielsweise über ein Peltier-element, erfolgen

Vorteilhafterweise ist die Temperatur des Mahlguts über die Thermoeinheit einstellbar. Dazu umfasst die Abkühl- und/oder die Temperiereinrichtung bevorzugt ein Eingabemittel zum Eingeben der Zieltemperatur oder des Zieltemperaturbereichs des Mahlguts, im vorliegenden Fall der gerösteten Kaffeebohnen. Das Eingabemittel kann beispielsweise ein Schalter, ein Schieber, ein Drehknopf und/oder eine Tastatur sein. Das Eingabemittel kann mit einem Anzeigemittel, beispielsweise einem Display, versehen sein, welches die auswählbaren Temperaturen, die ausgewählte Temperatur und/oder den ausgewählten Temperaturbereich anzeigt. Die Thermoeinheit kann auch mit einem Prozessorsystem verbunden sein, über welches die Temperatur oder der Temperaturbereich direkt oder in Abhängigkeit anderen Parameter an die Thermoeinheit eingegeben wird.

Um sicherzustellen, dass das Mahlgut die gewünschte Zieltemperatur, bzw. ein Temperatur im gewünschten Zieltemperaturbereich, hat, umfasst die Vorrichtung vorzugsweise eine Messeinrichtung zum Messen der Temperatur des gerösteten Kaffees vor, während und/oder nach dem Mahlen.

Die Temperaturmessung des Mahlguts erfolgt bevorzugt durch eine Temperaturmessung der umgebenden Luft oder durch eine Schüttgutmessung, bei welcher der Temperatursensor in das Schüttgut gehalten oder vom Schüttgut umströmt wird. Für die Temperaturmessung kann der Sensor in direkten Kontakt mit dem Schüttgut oder der umgebenden Luft gebracht werden oder die Temperaturmessung erfolgt kontaktlos, zum Beispiel optisch.

Bevorzugt umfasst die erfindungsgemässe Vorrichtung eine Regeleinrichtung zum Temperieren der Einheit zum Mahlen der Bohnen, insbesondere der Mahlwerkzeuge, in Abhängigkeit von der Temperatur des Mahlguts. Die Temperierung der Mahleinheit erfolgt dann automatisch in Abhängigkeit von der Temperatur des Mahlguts und in Abhängigkeit von der ausgewählten Zieltemperatur, bzw. dem ausgewählten Zieltemperaturbereich. Ist das aus der Mahleinheit ausgehende Mahlgut zu kalt wird die Temperatur hochgestellt, ist das ausgehende Mahlgut zu warm, wird die Temperatur heruntergestellt.

Vorteilhafterweise weist die erfindungsgemässe Vorrichtung ein Eingabe- und Vergleichmittel auf, mit welchen die Temperatur des Mahlguts in Abhängigkeit von der gewünschten Teilchengrössenverteilung des gemahlenen Kaffees bestimmt wird.

Es hat sich gezeigt, dass feiner gemahlener Kaffee weit weniger CO₂ als grob gemahlener Kaffee speichert, der Entgasungsprozess daher in Regel weniger stark zu forcieren ist.

Der Energieaufwand kann daher optimiert werden, wenn eine die Entgasung begünstigenden Temperierung des Mahlguts nur in dem Masse stattfindet, wie sie notwendig ist. Je nach der Teilchengrössenverteilung des gemahlenen Kaffees kann die Temperatur des Mahlguts also gezielt gewählt werden; in der Regel eher höhere Temperaturen für gröberen Kaffee, und eher niedrigere Temperaturen für fein zu mahlenden Kaffee.

Die Regelung kann aufgrund einer in einem Prozesssystem hinterlegten Tabelle erfolgen, welche den Zusammenhang zwischen Partikelgrösse und Temperatur für die Entgasung herstellt. Die Daten der Tabelle können empirisch erhoben werden.

Die Regelung kann auch auf der Basis von online oder inline gemessenen Daten erfolgen, zum Beispiel aufgrund der Partikelgrössen nach der Vermahlung, des CO₂-Gehalts vor und/oder während und/oder nach der Vermahlung oder aufgrund anderer Parameter, die direkt oder indirekt prozessrelevant sind.

Die Regelung kann auf Expertenwissen oder anderen artifiziellen intelligenten Systemem der Steuerungs- und/oder Regeltechnik basieren.

Die Aufgabe wird ausserdem gelöst durch ein Verfahren zum Verarbeiten von Kaffeebohnen, bei dem sichergestellt wird, dass die Temperatur des Mahlguts, zumindest bei Beginn des Mahlvorgangs, zwischen 30°C und 150°C, insbesondere zwischen 35°C und 100°C, bevorzugt zwischen 40°C und 90°C, besonders bevorzugt zwischen 40°C und 60°C beträgt.

Ein erfindungsgemässes Verfahren zum Verarbeiten von Kaffeebohnen umfasst dazu beispielsweise die folgenden Verfahrensschritte: (i) Rösten der Kaffeebohnen; (ii) Abkühlen der Kaffeebohnen auf Temperaturen von grösser als 66°C; (iii) Mahlen der Kaffeebohnen bei Temperaturen zwischen 66°C und 150°C.

Alternativ oder zusätzlich umfasst das erfindungsgemässe Verfahren die folgenden Verfahrensschritte:
(i) Rösten der Kaffeebohnen;
(ii) Abkühlen der Kaffeebohnen;
(iii) Temperaturmessung der Kaffeebohnen während der Abkühlung;
(iv) falls die Temperatur grösser als eine festgesetzte Zieltemperatur ist, weiter mit (ii), sonst Überführen der Kaffeebohnen in eine Mahleinheit; (v) Mahlen der Kaffeebohnen; wobei die Zieltemperatur einen Wert zwischen 30°C und 150°C, insbesondere zwischen 35°C und 100°C, bevorzugt zwischen 40°C und 90°C, besonders bevorzugt zwischen 40°C und 60°C besitzt.

Die Temperaturmessung wird dabei kontinuierlich oder zumindest in regelmässigen Zeitabständen durchgeführt. Die typischen Zeitabstände zwischen zwei aufeinander folgenden Temperaturmessungen betragen dabei bevorzugt 5-300 Sekunden. Die Messung kann auch, z.B. in einem Regelkreis, quasikontinuierlich erfolgen.

Die Aufgabe wird weiterhin gelöst durch ein Verfahren zum Verarbeiten von Kaffeebohnen in einer Einheit zum Mahlen der Bohnen, insbesondere wie oben beschrieben, dass das Mahlgut vor oder während des Mahlens derart temperiert wird, dass die Temperatur des Mahlguts zumindest bei Beginn des Mahlvorgangs zwischen 30°C und 150°C, insbesondere zwischen 35°C und 100°C, bevorzugt zwischen 40°C und 90°C, besonders bevorzugt zwischen 40°C und 60°C liegt.

Bevorzugt wird dazu die Einheit zum Mahlen derart temperiert wird, dass die Temperatur des Mahlguts zwischen 30°C und 150°C, insbesondere zwischen 35°C und 100°C, weiter insbesondere zwischen 40°C und 60°C liegt, insbesondere die Mahlwerkzeuge mindestens einer Mahlstufe auf Temperaturen zwischen 30°C und 150°C, insbesondere zwischen 35°C und 120°C, weiter insbesondere zwischen 40°C und 110°C, bevorzugt zwischen 40°C und 90°C, besonders bevorzugt zwischen 40°C und 60°C temperiert werden.

Da ein sehr enger Kontakt zwischen den Mahlwerkzeugen und dem Mahlgut besteht, stellt sich ein Temperaturausgleich zwischen Mahlgut und Mahlwerkzeugen ein und das Mahlgut nimmt im Wesentlich die durch die Mahlwerkzeuge vorgegebene Temperatur ein.

Alternativ kann ein Zieltemperaturbereich ausgewählt werden, der zwischen 30°C und 150°C, insbesondere zwischen 35°C und 100°C, weiter insbesondere zwischen 40°C und 60°C liegt, zum Beispiel ein Temperaturbereich mit einer Temperaturspanne von 2-10°C.

Bevorzugt weist das erfindungsgemässe Verfahren einen Verfahrensschritt auf, bei dem die Temperatur des gerösteten Kaffees vor, während und/oder nach dem Mahlen gemessen wird. Die gemessene Temperatur kann zur Kontrolle verwendet werden, oder dazu, die beispielsweise in einer Temperiereinheit gewählte Temperatur nachzustellen.

Bevorzugt wird die Temperatur der Einheit zum Mahlen, insbesondere der Mahlwerkzeuge, in Abhängigkeit von der Temperatur des Mahlguts gesteuert und/oder geregelt.

Die Aufgabe wird ausserdem gelöst durch ein Verfahren, insbesondere wie oben beschrieben, bei dem die Temperatur des Mahlguts und/oder der Einheit zum Mahlen, insbesondere der Mahlwerkzeuge, in Abhängigkeit von der gewünschten Partikelgrössenverteilung des gemahlenen Kaffees eingestellt wird, insbesondere derart, dass der CO₂ Gehalt des gemahlenen Kaffees unmittelbar nach dem Mahlen, bzw. nach einer Lagerzeit von maximal 20 Stunden, unterhalb von 0.5 ml/g liegt.

Für gemahlenen Kaffee mit einem Maximum der Partikelgrössenverteilung bei ca. 500 µm kann das Mahlgut beispielsweise bei eine Temperatur von etwa 50°C gemahlen werden, damit nach einer Entgasungszeit von 7 Stunden nach dem Mahlen nur noch ein Gasgehalt von 0.5 ml/g verbleibt.

Soll der Kaffee gröber gemahlen werden, liegen also grössere Partikel vor, so hat es sich als vorteilhaft erwiesen, die Mahlung bei einer höheren Temperatur vorzunehmen, bei feiner gemahlenem Kaffee und kleineren Partikeln kann die Mahlung bei kühleren Temperaturen erfolgen.

Die folgende Tabelle zeigt den Zusammenhang zwischen Teilchengrösse, hier als Median der Teilchengrössen angegeben, und bevorzugter Mahltemperatur.

| x50 [µm] | Temperatur [°C] |
|---|---|
| 504 | 46 |
| 328 | 28 |
| 134 | 15 |

Die Erfindung ist im Folgenden anhand von Zeichnungen näher erläutert.

Es zeigt
- Figur 1: ein erstes Beispiel für eine erfindungsgemässe Vorrichtung mit einer Temperiereinrichtung für die Mahlwerkzeuge in schematischer Darstellung;
- Figur 2: ein zweites Beispiel für eine erfindungsgemässe Vorrichtung mit einer Temperiereinrichtung und einer Mahlzufuhreinrichtung.

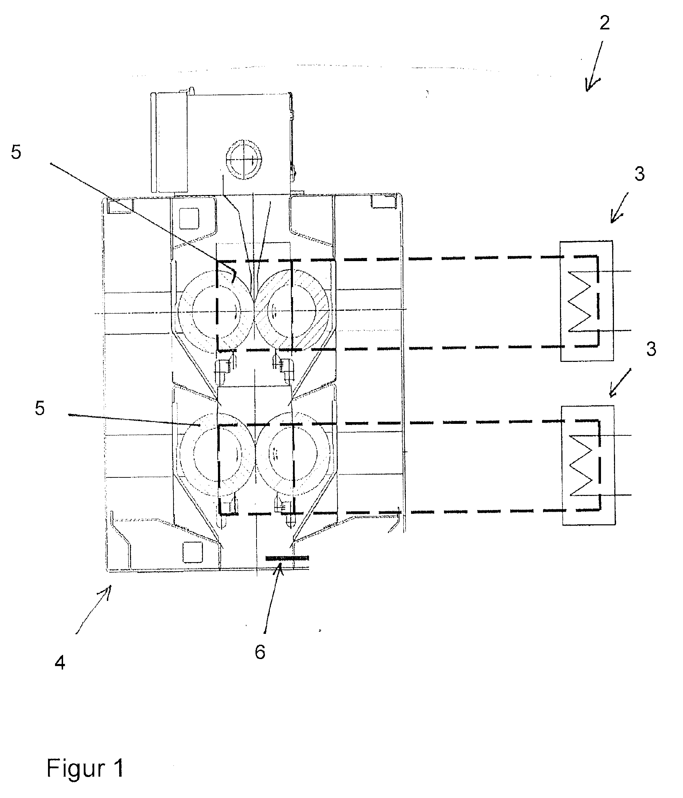

Figur 1 zeigt eine Schematische Darstellung einer erfindungsgemässen Vorrichtung 1 mit einer Thermoeinheit 2. In diesem Fall umfasst die Thermoeinheit 2 eine Temperiereinrichtung 3b für die Einheit zum Mahlen 4, hier Temperiereinrichtungen 3b für die Mahlwerkzeuge 5, die hier Walzenpaare sind.

Die Vorrichtung 1 umfasst einen Messeinrichtung 6 mit einem Temperatursensor, der die Temperatur des gemahlenen Kaffees erfasst.

Die gemessene Temperatur wird verwendet, um die Temperiereinrichtungen 3b nachzuregeln, so dass das Mahlgut auf einer bestimmten Zieltemperatur gehalten wird.

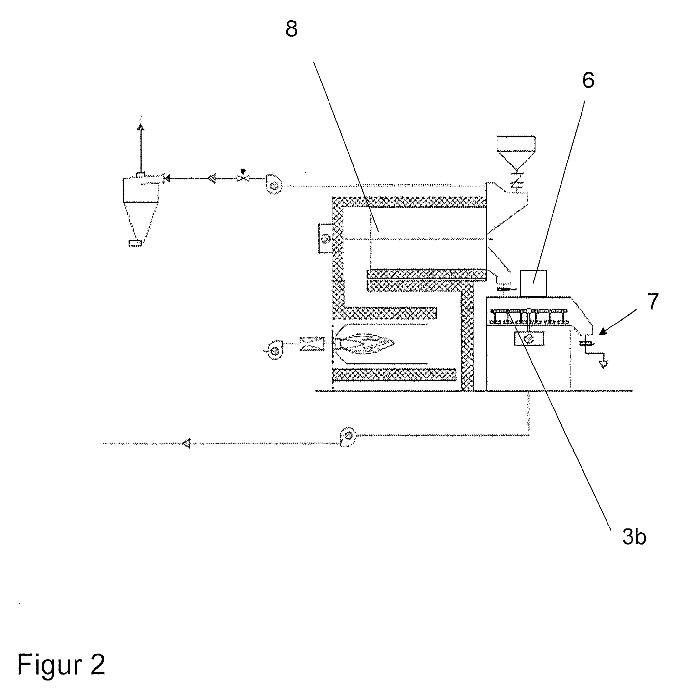

Figur 2 zeigt ein zweites Beispiel für eine erfindungsgemässe Vorrichtung mit einer Temperiereinrichtung 3a und einer Mahlzufuhreinrichtung 7.

Der Kaffee wird zunächst in einer Röstmaschine 8, hier einem Trommelröster, geröstet. Nach Abschluss der Röstung wird der Kaffe in eine Temperiereinrichtung 3a geleitet, in welcher der Kaffee von Luft durchströmt wird und dabei abkühlt. Die Temperiereinrichtung umfasst eine Messeinrichtung 6, mit welcher die Temperatur des Kaffees kontrolliert wird. Hat der Kaffee die für die Mahlung gewünschte Temperatur erreicht, so gelangt der Kaffee über die Mahlzufuhreinrichtung 7 in das in dieser Figur nicht gezeigte Mahlwerk.

Bei der Mahlzufuhreinrichtung 7 kann es sich um ein Schüttgutventil handeln, das in Abhängigkeit einer, bevorzugt zuvor festgelegten, Temperatur öffnet. Das Ventil kann auch ein Signal erhalten, sobald die Messeinrichtung 6 einen bestimmten Temperaturwert festgestellt hat.

## Patentansprüche

1. Vorrichtung zum Bearbeiten von gerösteten Kaffeebohnen, **dadurch gekennzeichnet, dass** die Vorrichtung eine Thermoeinheit (2) umfasst, die sicherstellt, dass die Temperatur der gerösteten Kaffeebohnen während des Mahlvorgangs, zumindest bei Beginn des Mahlvorgangs, zwischen 30°C und 150°C, insbesondere zwischen 35°C und 100°C, bevorzugt zwischen 40°C und 90°C, weiter bevorzugt zwischen 40°C und 60°C, beträgt.

2. Vorrichtung nach Anspruch 1, **dadurch gekennzeichnet, dass** die Thermoeinheit (2) eine Temperiereinrichtung (3a) und eine Mahlzufuhreinrichtung umfasst, wobei die Temperiereinrichtung und Mahlzufuhreinrichtung so ausgelegt sind, dass die gerösteten Kaffeebohnen für den Beginn des Mahlvorgangs auf Temperaturen des Mahlguts von 30°C und 150°C, insbesondere zwischen 35°C und 100°C, bevorzugt zwischen 40°C und 90°C, weiter bevorzugt zwischen 40°C und 60°C, temperierbar und bei diesen Temperaturen mahlbar sind.

3. Vorrichtung nach einem der Ansprüche 1 oder 2 , mit einer Einheit zum Mahlen der Bohnen, **dadurch gekennzeichnet, dass** die Thermoeinheit (2) eine Temperiereinrichtung (3b) für die Einheit zum Mahlen (4) umfasst, die so ausgelegt ist, dass die Temperatur des Mahlguts zwischen 30°C und 150°C, insbesondere zwischen 35°C und 100°C, bevorzugt zwischen 40°C und 90°C, weiter bevorzugt zwischen 40°C und 60°C, haltbar ist.

4. Vorrichtung nach Anspruch 1, **dadurch gekennzeichnet, dass** es sich bei der Temperiereinrichtung (3b) für die Einheit zum Mahlen (4) um eine Temperiereinrichtung (3) für Mahlwerkzeuge (5) handelt, welche die Mahlwerkzeuge mindestens einer Mahlstufe auf Temperaturen zwischen 30°C und 150°C, insbesondere zwischen 35°C und 120°C, weiter insbesondere zwischen 40°C und 110°C, bevorzugt zwischen 40°C und 90°C, besonders bevorzugt zwischen 40°C und 60°C, hält.

5. Vorrichtung nach einem der vorhergehenden Ansprüche, **dadurch gekennzeichnet, dass** die Temperatur des Mahlguts über die Thermoeinheit (2) steuer- und/oder regelbar ist.

6. Vorrichtung nach einem der vorhergehenden Ansprüche **dadurch gekennzeichnet, dass** die Vorrichtung eine Messeinrichtung (6) zum Messen der Temperatur des gerösteten Kaffees vor, während und/oder nach dem Mahlen umfasst.

7. Vorrichtung nach einem der vorhergehenden Ansprüche **dadurch gekennzeichnet, dass** Vorrichtung eine Regeleinrichtung zum Temperieren der Einheit zum Mahlen der Bohnen, insbesondere zum Temperieren der Mahlwerkzeuge mindestens einer Mahlstufe, in Abhängigkeit von der Temperatur des Mahlguts umfasst.

8. Vorrichtung nach einem der vorhergehenden Ansprüche **dadurch gekennzeichnet, dass** die Vorrichtung ein Eingabe- und Vergleichmittel aufweist, mit welchen die Temperatur des Mahlguts in Abhängigkeit von der gewünschten Teilchengrössenverteilung des ausgehenden Mahlguts bestimmt wird.

9. Verfahren zum Verarbeiten von Kaffeebohnen, umfassend die folgenden Verfahrensschritte:
(i) Rösten der Kaffeebohnen;
(ii) Abkühlen der Kaffeebohnen auf Temperaturen von grösser als 66°C;
(iii) Mahlen der Kaffeebohnen bei Temperaturen zwischen 66°C und 150°C.

10. Verfahren, insbesondere gemäss Anspruch 9, umfassend die Verfahrensschritte:
(i) Rösten der Kaffeebohnen;
(ii) Abkühlen der Kaffeebohnen;
(iii) Temperaturmessung der Kaffeebohnen während der Abkühlung;
(iv) falls die Temperatur grösser als eine festgesetzte Zieltemperatur ist weiter mit (ii), sonst Überführen der Kaffeebohnen in eine Mahleinheit;
(v) Mahlen der Kaffeebohnen,
wobei die Zieltemperatur einen Wert zwischen 30°C und 150°C, insbesondere zwischen 35°C und 100°C, bevorzugt zwischen 40°C und 90°C, weiter bevorzugt zwischen 40°C und 60°C, besitzt.

11. Verfahren zum Verarbeiten von Kaffeebohnen in einer Einheit zum Mahlen der Bohnen, insbesondere gemäss Anspruch 9 oder 10, **dadurch gekennzeichnet, dass** das Mahlgut vor oder während des Mahlens derart temperiert wird, dass die Temperatur des Mahlguts zumindest bei Beginn des Mahlvorgangs zwischen 30°C und 150°C, insbesondere zwischen 35°C und 100°C, bevorzugt zwischen 40°C und 90°C, weiter bevorzugt zwischen 40°C und 60°C, liegt.

12. Verfahren gemäss Anspruch 9-11, **dadurch gekennzeichnet, dass** die Einheit zum Mahlen derart temperiert wird, dass die Temperatur des Mahlguts zwischen 30°C und 150°C, insbesondere zwischen 35°C und 100°C, bevorzugt zwischen 40°C und 90°C, weiter bevorzugt zwischen 40°C und 60°C liegt, insbesondere die Mahlwerkzeuge mindestens einer Mahlstufe auf Temperaturen zwischen 30°C und 150°C, insbesondere zwischen 35°C und 120°C, weiter insbesondere zwischen 40°C und 110°C, bevorzugt zwischen 40°C und 90°C, besonders bevorzugt zwischen 40°C und 60°C, temperiert werden.

13. Verfahren gemäss einem der Ansprüche 9-12, **dadurch gekennzeichnet, dass** die Temperatur des gerösteten Kaffees vor, während und/oder nach dem Mahlen gemessen wird.

14. Verfahren gemäss Anspruch 9-13, **dadurch gekennzeichnet, dass** die Temperatur der Einheit zum Mahlen, insbesondere der Mahlwerkzeuge, in Abhängigkeit von der Temperatur des Mahlguts gesteuert und/oder geregelt wird.

15. Verfahren, insbesondere gemäss einem der Ansprüche 9-14, **dadurch gekennzeichnet, dass** die Temperatur des Mahlguts und/oder der Einheit zum Mahlen, insbesondere der Mahlwerkzeuge, in Abhängigkeit von der gewünschten Partikelgrössenverteilung des gemahlenen Kaffees eingestellt wird, insbesondere derart, dass der CO₂ Gehalt des gemahlnen Kaffees unterhalb von 0.1 ml/g ist.
